# NEUE EUROPÄISCHE PATENTSCHRIFT

(11) **EP 1 924 119 B2**
(45) Veröffentlichungstag und Bekanntmachung des Hinweises auf die Entscheidung über den Einspruch: **23.12.2020**
(45) Hinweis auf die Patenterteilung: 21.05.2014
(21) Anmeldenummer: 07016524.6
(22) Anmeldetag: 23.08.2007
(51) Int. Cl.: G01D 21/00, H04W 74/04

(54) **Verfahren zum drahtlosen Austausch von Daten und Funksystem**
Wireless data exchange method
Procédé destiné à l'échange de données sans fil

(30) Priorität: 14.11.2006 DE 102006053822
(43) Veröffentlichungstag der Anmeldung: 21.05.2008
(73) Patentinhaber: ista International GmbH, 45131 Essen (DE)
(72) Erfinder: Niederfeld, Gerhard, 45131 Essen (DE); Schulte, Bernd, 44625 Herne (DE); Volbert, Klaus, 45131 Essen (DE)
(74) Vertreter: Cohausz Hannig Borkowski Wißgott

(56) Entgegenhaltungen:
- EP-A- 1 037 185
- EP-A- 1 282 094
- EP-A- 1 705 620
- EP-A2- 0 784 387
- EP-A2- 1 037 185
- EP-A2- 1 282 094
- WO-A-00/21053
- WO-A1-00/21053
- WO-A1-00/70572
- WO-A1-94/05131
- DE-A1- 10 213 114

## Beschreibung

Die Erfindung betrifft ein Verfahren zum drahtlosen Austausch von Daten von mehreren Datenquellen zu wenigstens einem Empfänger, bei dem kommunikationseinleitende Funktelegramme von den Datenquellen im Wesentlichen periodisch auf einem hierfür bestimmten Kommunikationskanal ausgesendet werden und ein Empfänger nach Empfang eines kommunikationseinleitenden Funktelegramms mit einer der Datenquellen kommuniziert, zumindest um Daten mit der Datenquelle auszutauschen, und eine Datenquelle nach erfolgtem Austausch der Daten die weitere Aussendung periodischer kommunikationseinleitender Funktelegramme auf dem hierfür bestimmten Kommunikationskanal für ein vorbestimmtes Zeitintervall unterbricht.

Die Erfindung betrifft auch ein Funksystem mit mehreren Datenquellen und wenigstens einem Empfänger, zum drahtlosen Austausch von Daten von den mehreren Datenquellen zu dem wenigstens einen Empfänger, wofür die Datenquellen eingerichtet sind, kommunikationseinleitende Funktelegramme im Wesentlichen periodisch auf einem hierfür bestimmten Kommunikationskanal auszusenden und ein Empfänger eingerichtet ist, nach Empfang eines kommunikationseinleitenden Funktelegramms mit einer der Datenquellen zu kommunizieren, zumindest um Daten mit der Datenquelle auszutauschen, wobei eine Datenquelle eingerichtet ist, nach erfolgtem Austausch der Daten die weitere Aussendung periodischer kommunikationseinleitender Funktelegramme (B) auf dem hierfür bestimmten Kommunikationskanal zumindest für ein vorbestimmtes Zeitintervall zu unterbrechen.

Derartige Verfahren sind grundsätzlich im Stand der Technik bekannt und werden beispielsweise eingesetzt im Rahmen der Ablesung von Verbräuchen jeglicher Art, z.B. von Strom- oder Heizenergieverbräuchen, wobei es sich dann z.B. bei den Datenquellen um Geräte handeln kann, die den Verbrauch derartiger Ressourcen registrieren und z.B. zum regelmäßigen Abruf speichern. Beispielsweise kann es sich somit bei den Datenquellen um sogenannte Heizkostenverteiler handeln, die über ein Jahr hinweg den Heizverbrauch registrieren und beispielsweise zu einem Stichtag abspeichern. Die gespeicherten Stichtagswerte bzw. gegebenenfalls auch aktuelle Verbrauchswerte sowie ggfs. auch weitere Informationen können sodann aus derartigen Heizkostenverteilern abgefragt werden, wofür ein entsprechendes Empfangsgerät vorgesehen sein kann.

Das vorgenannte Einsatzgebiet ist lediglich beispielhaft zu verstehen und beschränkt das Einsatzgebiet der Erfindung nicht. Grundsätzlich kann das erfindungsgemäße Verfahren überall zum Einsatz kommen, wo mehrere Datenquellen ihre Daten funktechnisch an einen Empfänger zur Verfügung stellen.

Hierbei wird unter einem Empfänger im Rahmen der hier vorliegenden Erfindungsbeschreibung ein Gerät verstanden, welches in der Lage ist, sowohl die kommunikationseinleitenden Funktelegramme zu empfangen als auch die Daten, die von den Datenquellen ausgesendet werden. Hierbei ist ein Empfänger von derartigen Funktelegrammen und Daten weiterhin auch in der Lage, selbst als Sender aufzutreten, um die Kommunikation mit den Datenquellen, z.B. anhand eines bestimmten Funkprotokolls durchzuführen. Das wesentliche Anwendungsgebiet ist hierbei der Empfang der gespeicherten bzw. angesammelten Daten aus den Datenquellen, so dass hier trotz der Tatsache, dass dieses Gerät auch Sendeeigenschaften aufweist, im Rahmen der Erfindung von einem Empfänger gesprochen wird.

Mit Bezug auf das Anwendungsgebiet der Heizkostenerfassung kann es sich bei einem solchen Empfänger z.B. um ein mobiles Gerät handeln, welches von einem Servicetechniker bzw. einer für die Ablesung vorgesehenen Person durch eine Liegenschaft getragen wird, beispielsweise in zeitlicher Nähe nach einem Stichtag, wie z.B. dem Jahreswechsel, um die gespeicherten Stichtagswerte aus den Datenquellen auszulesen. Bei diesem vorgenannten Anwendungsgebiet, welches die Erfindung nicht beschränkt, erfährt der Empfänger durch den Empfang eines kommunikationseinleitenden Funktelegramms von einem der in der Liegenschaft vielfach vorhandenen Datenquellen, dass bei einer betreffenden Datenquelle Daten zum Abruf bereitstehen. Nach Empfang eines kommunikationseinleitenden Funktelegramms kann demnach der Empfänger der Datenquelle durch Aussendung eines Antworttelegramms mitteilen, dass der Empfänger zum Empfang der Daten bereit ist, so dass die Datenquelle die entsprechenden Daten absendet und der Empfänger die entsprechenden Daten empfangen kann.

Sämtliche Merkmale die im Rahmen dieser Erfindungsbeschreibung ggfs. am Beispiel von Heizkostenverteilern beschrieben werden, gelten allgemein für jegliche Art von Datenquellen und Empfängern.

Bei einer derartigen Art und Weise, einen Datenaustausch zwischen einer Vielzahl von Datenquellen, beispielsweise Heizkostenverteilern in einer Liegenschaft, mit einem Empfänger durchzuführen, ist das Problem bekannt, dass es zu Kollisionen zwischen den kommunikationseinleitenden Funktelegrammen der Vielzahl von Datenquellen kommen kann.

Dies liegt darin begründet, dass die einzelnen Datenquellen, insbesondere zusammen mit wenigstens einem Empfänger ein Funknetzwerk bilden und üblicherweise jeweils periodisch kommunikationseinleitende Funktelegramme aussenden, um so einen eventuell im Empfangsgebiet befindlichen Empfänger darauf hinzuweisen, dass eine entsprechende Datenquelle zum Datenaustausch zur Verfügung steht.

Aufgrund der Tatsache, dass zumindest für die kommunikationseinleitenden Funktelegramme ein bestimmter Kommunikationskanal vorgesehen ist, kommt es somit häufig zu Kollisionen auf einem solchen Kommunikationskanal, da sämtliche Datenquellen ihre kommunikationseinleitenden Funktelegramme periodisch auf demselben Kommunikationskanal absenden, der zu diesem Abfragezeitpunkt hierfür vorgesehen ist, was bedeutet, dass ein eventuell im Empfangsgebiet vorhandener Empfänger ein empfangendes kommunikationseinleitendes Funktelegramm nicht auswerten und somit auch nicht mit der entsprechenden Datenquelle in Kontakt treten kann bzw. aufgrund einer Kollision gar nicht erst empfangen kann.

Dabei ist es weiterhin im Stand der Technik als Problem bekannt, dass Datenquellen, von denen bereits ein kommunikationseinleitendes Funktelegramm von einem Empfänger empfangen wurde und von denen bereits ein Datenaustausch zum Empfänger stattgefunden hat, nach dem erfolgten Datenaustausch weiterhin periodisch die Funktelegramme aussenden, obwohl keine neuen Daten zur Versendung bereitstehen, so dass die Funktelegramme dieser speziellen, bereits abgefragten Datenquellen die Kommunikation mit noch nicht abgefragten Datenquellen störend, insbesondere durch Kollisionen, beeinflussen.

Verfahren und Funksysteme der vorbenannten Art sind z.B. auch aus der EP 1 705 620 A1 und DE 102 13 114 A1 bekannt. Bei diesen Verfahren erfolgt eine Versendung von mehreren äquidistanten Synchronisationstelegrammen als Paket zur Kompensation evtl. zeitlicher Drifts zwischen Datenquellen und Empfänger, nach dessen Versendung die Aussendung weiterer kommunikationseinleitender Funktelegramme unterbrochen wird, sowohl, wenn ein Datenaustausch erfolgte, als auch wenn er nicht erfolgt.

Aufgabe der Erfindung ist es, ein Verfahren bereitzustellen, mit dem das Risiko von Kollisionen verringert werden kann und um so einen einfacheren, sichereren und weniger Zeit in Anspruch nehmenden Datenaustausch zu ermöglichen.

Diese Aufgabe wird erfindungsgemäß durch ein Verfahren gemäß Anspruch 1 und ein Funksystem gemäß Anspruch 8 gelöst. Insbesondere wird diese Aufgabe dadurch gelöst, dass mit fortschreitender Abfrage von Datenquellen nach kollisionsfreiem Empfang eines kommunikationseinleitenden Funktelegramms sich die Anzahl vorhandener Datenquellen reduziert, die noch nicht abgefragt wurden und die weiterhin ihre für die Abfrage bestimmten kommunikationseinleitenden Funktelegramme aussenden und das System eingerichtet ist, zum Schluss die zur Verfügung stehenden Daten von der letzten alleinig ihre Funktelegramme aussendenden Datenquelle vom Empfänger abzufragen, wobei das vorbestimmte Zeitintervall so bemessen ist, dass innerhalb dieses Zeitintervalls die Abfrage sämtlicher zur Verfügung stehender Datenquellen vollständig abgeschlossen ist.

Wesentlicher Kerngedanke bei dieser erfindungsgemäßen Ausgestaltung ist es, dass nach einem kollisionsfreien Empfang von einem kommunikationseinleitenden Funktelegramm der Empfänger mit derjenigen Datenquelle, die dieses Funktelegramm ausgesendet hat, die Daten austauscht und dass im Anschluss an diesen Austausch die bereits abgefragte Datenquelle die Kommunikation mit den verbleibenden Datenquellen nicht weiter stört.

Dies liegt darin begründet, dass nach der erfolgreichen Abfrage auf dem für die Aussendung der kommunikationseinleitenden Funktelegramme und gegebenenfalls auch für die Aussendung der Daten vorgesehenen Kommunikationskanal von der abgefragten Datenquelle für das genannte vorbestimmte Zeitintervall keine weiteren kommunikationseinleitenden Funktelegramme übersandt werden.

Aus diesem Grund kann eine abgefragte Datenquelle nach der Abfrage der Daten die Aussendung von kommunikationseinleitenden Funktelegrammen anderer noch nicht abgefragter Datenquelle nicht weiterhin negativ beeinflussen. Somit wird mit fortschreitender Abfrage von Datenquellen nach dem kollisionsfreien Empfang eines kommunikationseinleitenden Funktelegramms das Risiko von Kollisionen immer weiter verringert, da mit fortschreitender Abfrage immer weniger Datenquellen vorhanden sind, die noch nicht abgefragt wurden und die weiterhin periodisch ihre für die Abfrage bestimmten kommunikationseinleitenden Funktelegramme aussenden, bis dass zum Schluss nur noch eine Datenquelle vorhanden ist, die alleinig periodisch ihre Funktelegramme aussendet, bis dass auch diese Datenquelle hinsichtlich der zur Verfügung stehenden Daten vom Empfänger abgefragt wurde.

Es ist dabei vorgesehen, dass das vorbestimmte Zeitintervall derart großzügig bemessen ist, dass innerhalb dieses Zeitintervalls üblicherweise damit gerechnet werden darf, dass die Abfrage sämtlicher, zur Verfügung stehender Datenquellen vollständig abgeschlossen werden kann. Bei einem solchen Zeitintervall kann es sich somit beispielsweise um mehrere Minuten, Stunden oder gegebenenfalls einen Tag handeln.

Neben der Tatsache, dass durch die Unterbrechung der Aussendung von kommunikationseinleitenden Funktelegrammen für dieses Zeitintervall die Kollisionsrate verringert wird, kann das Verfahren weiterhin den Vorteil haben, dass während des Zeitintervalls darüber hinaus auch Energie gespart wird, wenn nämlich eine solche Datenquelle nicht nur die Aussendung von Funktelegrammen auf den bislang hierfür bestimmten Kommunikationskanal unterbricht, sondern insgesamt die Aussendung von kommunikationseinleitenden Funktelegrammen vollständig unterbricht.

In einer möglichen Ausführung der Erfindung kann es vorgesehen sein, dass nach der Aussendung eines kommunikationseinleitenden Funktelegramms eine Datenquelle automatisch auf Empfang schaltet, insbesondere für ein dafür zeitlich begrenztes vorgesehenes Empfangsfenster, um festzustellen, ob ein gegebenenfalls im Empfangsgebiet vorhandener Empfänger auf das ausgesendete Funktelegramm antwortet. Ist dies der Fall und können sich so die aussendende Datenquelle und der Empfänger aneinander synchronisieren, so kann der Datenaustausch stattfinden, z.B. anhand eines vorgesehenen Protokolls.

Hierbei kann es in einer möglichen Ausführung vorgesehen sein, dass der Austausch der zur Übertragung vorgesehenen und gegebenenfalls gespeicherten Daten der Datenquelle auf demselben Kommunikationskanal stattfindet wie auch die Aussendung der kommunikationseinleitenden Funktelegramme.

Allgemein kann es weiterhin vorgesehen sein, dass neben dem Austausch von Daten, die zum Austausch vorgesehen sind, wie beispielsweise Verbrauchsdaten, bei dieser Gelegenheit von einem Empfänger auch andere Informationen, gegebenenfalls aktiv abgefragt werden, die in einer Datenquelle zur Verfügung stehen und nur auf Anforderung übersandt werden. Z.B. kann es sich um Status- oder statistische Informationen handeln. Auch kann es vorgesehen sein, vom Empfänger, insbesondere bei dieser Gelegenheit, Daten an eine Datenquelle zu übersenden, wie beispielsweise für die Programmierung von Stichtagen oder zum Anstoßen eines Testprogramms.

In einer anderen Ausführung kann es auch vorgesehen sein, dass eine weitere Kommunikation, wie z.B. in dem vorgenannten Sinne nach einer Datenübertragung und/oder die Datenübertragung selbst zwischen der Datenquelle und einem Empfänger auf einem anderen Kommunikationskanal stattfindet.

So kann es demnach beispielsweise vorgesehen sein, dass sämtliche Datenquellen zunächst auf einem bestimmten Kommunikationskanal die funkeinleitenden Funktelegramme aussenden, woraufhin nach einem erfolgreichen Empfang eines solchen Funktelegramms der Datenaustausch selbst sodann auf einem anderen, z.B. nur für die Datenübertragung vorgesehenen Kommunikationskanal stattfindet.

Zur Unterbrechung der Aussendung periodischer kommunikationseinleitender Funktelegramme im Sinne der Erfindung kann es in einer Ausführung auch vorgesehen sein, dass eine Datenquelle, insbesondere nach einer erfolgreichen Datenübertragung der gespeicherten Daten an einen Empfänger, die weitere Aussendung periodischer Funktelegramme auf dem hierfür bestimmten Kommunikationskanal unterbricht und auf einem anderen Kommunikationskanal oder einem weiteren, hierfür bestimmten Kommunikationskanal fortsetzt. Hierbei kann es insbesondere vorgesehen sein, dass der andere bzw. weitere, hierfür bestimmte Kommunikationskanal wiederum für sämtliche Datenquellen des Funksystems gleich ist, was in einer Ausführung bedeuten kann, dass zu einem bestimmten Zeitpunkt, wenn ein Empfangsgerät zur Abfrage der Datenquellen eingesetzt wird, dieses Empfangsgerät nach kommunikationseinleitenden Funktelegrammen auf einem bestimmten ersten Kommunikationskanal horcht, bis dass alle Datenquellen abgefragt sind und bei einer daraufhin folgenden späteren Abfrage, z.B. nach einem Jahr, die Abfrage auf dem anderen Kommunikationskanal stattfindet, da im Rahmen des erfindungsgemäßen Verfahrens sämtliche Datenquellen von dem einen ersten zu einem anderen Kommunikationskanal nach der erfolgreichen Datenübertragung gewechselt haben.

Es kann ebenso vorgesehen sein, dass das Wechseln auf einen anderen Kanal entweder nur zum Austausch der Daten und/oder zur Fortführung der periodischen Aussendung der Funktelegramme zeitlich begrenzt stattfindet, so dass nach Ablauf des vorgesehenen Zeitintervalls für diesen Wechsel die Datenquelle mit der Aussendung der kommunikationseinleitenden Funktelegramme sodann wieder auf dem ursprünglich hierfür vorgesehenen Kommunikationskanal fortfährt.

So kann es demnach vorgesehen sein, dass zwischen zwei Kommunikationen, die zur Abfrage von Daten aus Datenquellen vorgesehen sind, ein einfacher oder auch mehrfacher, insbesondere zweifacher Wechsel des Kanals für die Aussendung der periodischen Funktelegramme zwischen zwei hierfür bestimmten Kommunikationskanälen stattfindet.

Bei sämtlichen möglichen Ausführungen der Erfindung kann es vorgesehen sein, dass die Aussetzung der Kommunikation, insbesondere die Aussetzung der kommunikationseinleitenden Funktelegramme und/oder die Umschaltung auf einen anderen Kommunikationskanal initiiert wird durch einen Befehl, der von einem Empfänger an eine Datenquelle vor oder auch nach der Datenübertragung gesendet wird.

Gegebenenfalls kann es in anderer Ausführung auch vorgesehen sein, dass automatisch eine Datenquelle auf einen anderen Kommunikationskanal entweder zur Fortführung der periodischen Aussendung der Funktelegramme und/oder zur Aussendung der betreffenden Daten automatisch wechselt, sobald ihm durch einen Empfänger angezeigt wird, dass ein ursprünglich ausgesandtes Funktelegramm erfolgreich und insbesondere kollisionsfrei empfangen wurde.

Bezüglich der vorgenannten Verfahrensvarianten ist festzuhalten, dass die Datenquellen beispielsweise gebildet werden können durch Geräte zur Verbrauchsdatenerfassung, wie beispielsweise Heizkostenverteiler oder Wasser- oder Wärmezähler oder spezielle Kommunikationsmodule für Verbrauchszähler. Trotz dieser Nennung auf dem Anwendungsgebiet der Verbrauchsdatenerfassung ist die Erfindung nicht auf dieses Anwendungsgebiet beschränkt.

Grundsätzlich kann es beispielsweise auch vorgesehen sein, dass die Datenquellen gebildet werden durch beliebige andere Geräte, die Daten zur Aussendung an einen Empfänger zur Verfügung stellen, wobei ein solcher Empfänger wie vorgenannt auch Sendeeigenschaften aufweisen kann. Beispielsweise kann es sich in einer anderen Anwendung auch um Geräte zur Alarmmeldung, insbesondere um Rauch- oder auch um Brandmelder handeln. Hierbei kann es sich in allen Anwendungsfällen auch um beliebige Arten von Daten handeln, die während des Betriebs einer Datenquelle angesammelt werden. Neben den vorgenannten Verbräuchen können somit auch Statusinformationen oder sonstige beliebige Daten zur Übertragung bereit gehalten werden. Gerade bei Geräten zur Alarmmeldung kann es vorgesehen sein diese periodisch, z.B. einmal jährlich hinsichtlich ihrer Funktion zu überprüfen und dabei ggfs. Statusinformationen, Fehlermeldung, durchgeführte Alarmanzeigen oder sonstige Informationen als Daten auszulesen mit einem geeigneten Empfänger.

Ausführungsbeispiele der Erfindung sind in den nachfolgenden Zeichnungen näher erläutert. Es zeigen:
- Figur 1: eine Verfahrensvariante, bei der die Aussendung kommunikationseinleitender Funktelegramme für ein bestimmtes Zeitintervall vollständig unterbrochen wird unter Beibehaltung des Kommunikationskanals
- Figur 2: eine Verfahrensvariante, bei der der Kommunikationskanal nur für die Aussendung der Daten gewechselt wird
- Figur 3: eine Verfahrensvariante, bei der die Aussendung der kommunikationseinleitenden Funktelegramme für eine vorgegebene Zeit auf einem anderen Kanal fortgeführt wird
- Figur 4: eine Verfahrensvariante, bei der der Wechsel des bestimmten Kanals nach einer erfolgten Datenabfrage bis zur nächsten Datenabfrage vorgenommen wird

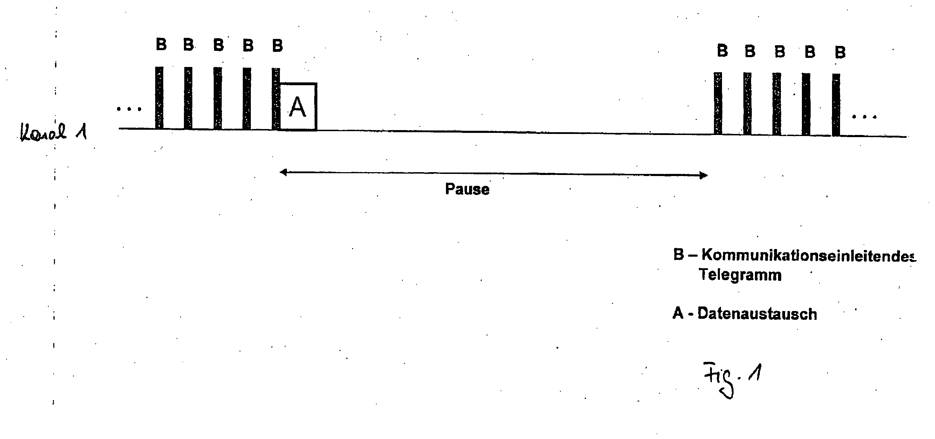

Figur 1 zeigt ein Ausführungsbeispiel, bei dem zur Verdeutlichung nur die Kommunikation von einer Datenquelle von einer Vielzahl von Datenquellen dargestellt wird. Erkennbar ist hier ein einziger Kanal 1, auf dem die hier nicht dargestellte Datenquelle periodisch kommunikationseinleitende Funktelegramme B aussendet. Nicht dargestellt ist weiterhin, dass sich im Empfangsgebiet einer solchen Datenquelle ein Empfänger befinden kann, der ein solches kommunikationseinleitendes Telegramm empfangen kann.

In dem hier vorliegenden Fall der Figur 1 wird angenommen, dass nach der Aussendung des letzten, in der Figur 1 des fünften kommunikationseinleitenden Funktelegramms B ein nicht dargestellter Empfänger den Empfang des Funktelegramms quittiert, woraufhin ein Datenaustausch stattfindet, was hier durch den zeitlich in Anspruch genommenen Bereich A symbolisiert ist. Nach der erfolgten Datenübertragung erfolgt erfindungsgemäß die Unterbrechung der weiteren Aussendung periodischer kommunikationseinleitender Funktelegramme B, um so Kollisionen mit anderen Funktelegrammen von anderen Datenquellen für die zeitliche Dauer der vorbestimmten Pause zu vermeiden. Nach Ablauf der Pause ist hier erkennbar, dass die betrachtete Datenquelle erneut auf dem hierbei vorgesehenen Kanal die periodische Aussendung von Funktelegrammen fortsetzt, um die Bereitschaft für weitere Kommunikationen anzuzeigen.

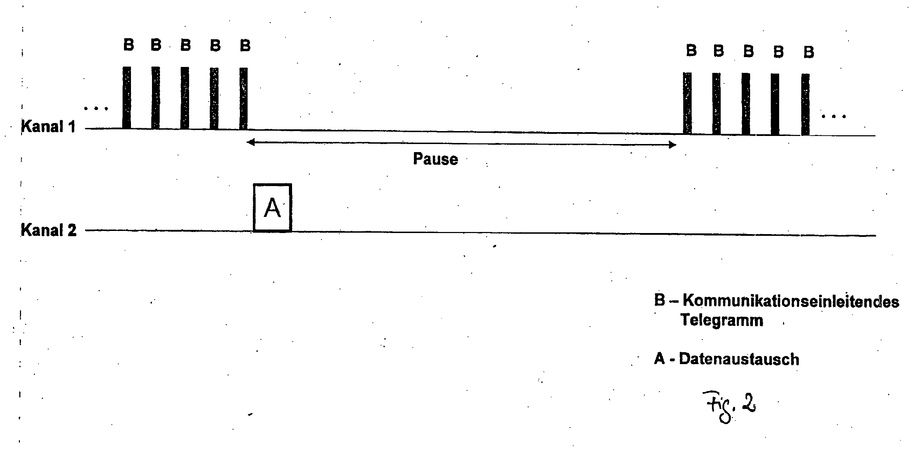

Die Figur 2 illustriert im Wesentlichen die gleiche Situation wie in der Figur 1, jedoch ist es hier erfindungsgemäß vorgesehen, dass nach dem erfolgreichen Empfang eines kommunikationseinleitenden Funktelegramms B die Übermittlung der gespeicherten Daten der Datenquelle auf einem zweiten Kanal 2 erfolgt. Somit liegt hier eine Kanaltrennung vor für die Aussendung der kommunikationseinleitenden Funktelegramme und für die Aussendung der eigentlichen relevanten Daten. Wiederum ist hier vorgesehen, nach einer Pause der Unterbrechung die periodische Aussendung der kommunikationseinleitenden Funktelegramme auf demselben ursprünglichen Kanal 1 fortzusetzen.

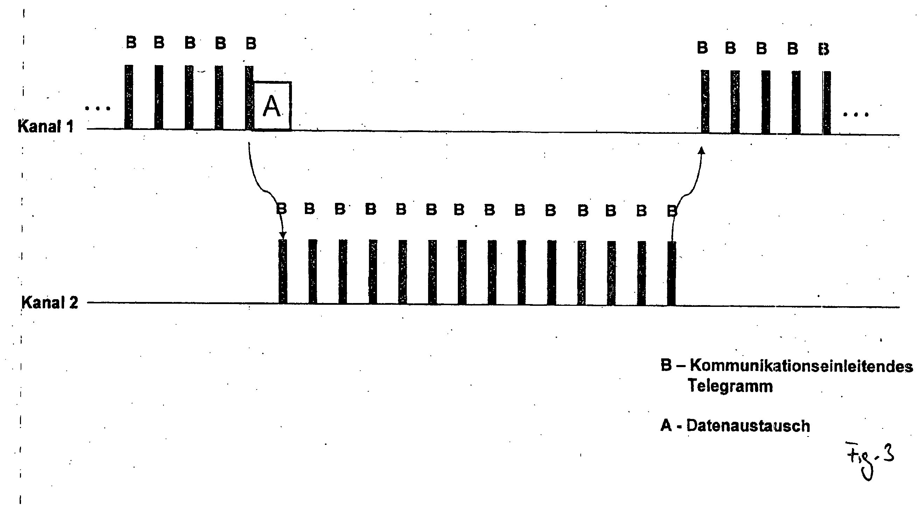

Die Figur 3 zeigt eine weitere alternative Ausgestaltung des erfindungsgemäßen Verfahrens, bei dem es vorgesehen ist, dass die Datenquellen zunächst auf einem Kanal 1 periodisch die Funktelegramme zur Kommunikationseinleitung aussenden. Nach erfolgreichem Empfang eines solchen Funktelegramms können sodann die Daten in dem zeitlichen Fenster A mit einem Empfänger auf demselben Kanal, ggfs. auch auf einem anderen Kanal, ausgetauscht werden, wobei es sodann vorgesehen ist, dass für einen vorgegebenen Pausenzeitraum die abgefragte Datenquelle die weitere Aussendung von periodisch aufeinander folgenden kommunikationseinleitenden Funktelegrammen B auf einem anderen, hierfür vorgesehenen Kanal 2 fortführt.

So wird sichergestellt, dass die weiteren, bislang noch nicht abgefragten Datenquellen weiterhin ihre Funktelegramme auf dem Kanal 1 aussenden können, ohne dass Kollisionen zu befürchten sind mit Funktelegrammen, die von bereits abgefragten Datenquellen ausgesendet werden. Während der Aussendung der Funktelegramme auf dem Kanal 2 kann es weiterhin vorgesehen sein mit dem oder einem anderen Empfänger nochmals in Kontakt zu der abgefragten Datenquelle über den Kanal 2 zu treten, was hier jedoch nicht gezeigt wird.

Nach Ablauf des Pausenzeitraums wird hingegen die periodische Aussendung kommunikationseinleitender Funktelegramme auf dem ursprünglich hierfür vorgesehenen Kanal 1 fortgeführt und auf dem alternativen Kanal 2 abgebrochen.

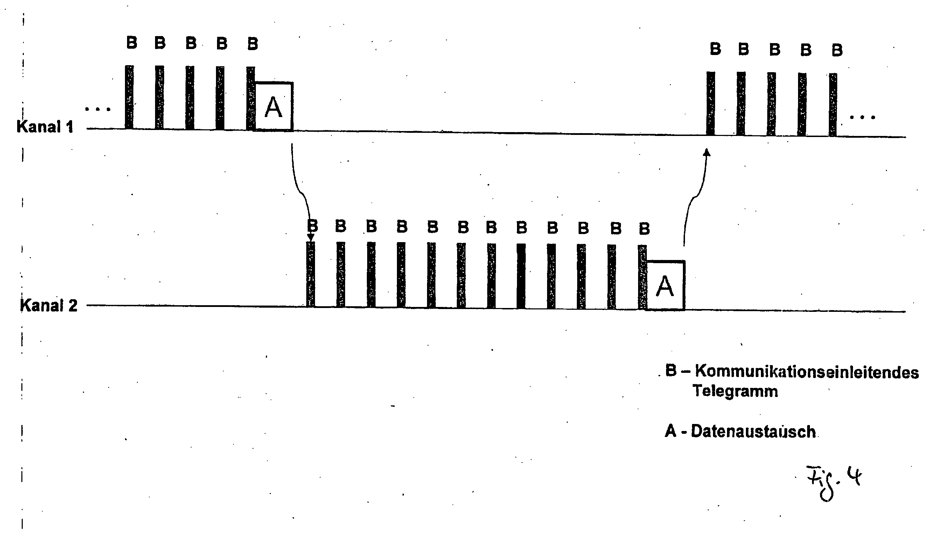

Die Figur 4 zeigt eine weitere alternative Ausführungsform, bei der zu einem ersten Abfragezeitpunkt der Daten alle Datenquellen, die kommunikationseinleitenden Funktelegramme B sowie bevorzugt auch die auszusendenden Daten A nur auf einem ersten, hierfür vorgesehenen Kanal 1 kommunizieren.

Nach einer erfolgten Abfrage der Daten aus einer Datenquelle unterbricht diese Datenquelle die weitere Aussendung kommunikationseinleitender Funktelegramme B auf dem ursprünglich hierfür vorgesehenen Kanal 1 und führt diese auf einem alternativen Kanal 2 fort. Dies kann bei sämtlichen Datenquellen der Fall sein, die im Rahmen des erfindungsgemäßen Verfahrens von einem Empfänger abgefragt werden, so dass nach der vollständigen Abfrage sämtlicher, im System vorhandener Datenquellen alle Datenquellen sodann auf dem zweiten alternativen Kanal 2 die kommunikationseinleitenden Telegramme B aussenden, so dass bei einer späteren, erneuten Abfrage, z.B. nach Ablauf eines Messzeitraums, bei Verbrauchsdatenerfassungsgeräten z.B. nach Ablauf eines Jahres, mit einem Empfangsgerät dieselben Datenquellen auf dem zweiten alternativen Kanal 2 abgefragt werden, wobei erneut das erfindungsgemäße Verfahren eingesetzt wird und wobei es sodann vorgesehen sein kann, dass nach der erneuten Abfrage der Daten die Aussendung der kommunikationseinleitenden Funktelegramme B auf dem ursprünglichen Kanal 1 oder aber auch auf einem wiederum weiteren, z.B. einem dritten Kanal weiter fortgeführt wird.

Es kann hier demnach vorgesehen sein, dass nach Ablauf von jeweiligen Abfragezeiträumen die Datenquellen eines Funksystems immer zwischen zwei oder auch mehr Funkkanälen zur Aussendung der kommunikationseinleitenden Funktelegramme B und/oder der zu versendenden Daten A hin- und herwechseln.

Neben einem Wechsel zwischen nur zwei alternativen Kanälen kann es auch vorgesehen sein, dass nach jeder erfolgten Abfrage die Datenquellen auf einen anderen Kanal wechseln, der jedoch für sämtliche Datenquellen des Systems immer gleich ist. Hierbei kann es vorgesehen sein, dass nach einem n-fachen Wechsel von Kommunikationskanälen die Datenquellen wieder auf den ursprünglichen ersten Kanal zurückgreifen, so dass hier von einer n-fachen Periodizität der benutzten Kommunikationskanäle gesprochen werden kann.

Bezüglich sämtlicher, hier beschriebenen Ausführungsvarianten ist festzustellen, dass die in Verbindung mit einer Ausführung genannten technischen Merkmale nicht nur bei der spezifisch genannten Ausführung eingesetzt werden können, sondern auch bei jeweils anderen, hier genannten oder möglichen Ausführungen der Erfindung.

## Patentansprüche

1. Verfahren zum drahtlosen Austausch von Daten von mehreren Datenquellen zu wenigstens einem Empfänger, bei dem kommunikationseinleitende Funktelegramme von den Datenquellen im Wesentlichen periodisch auf einem hierfür bestimmten Kommunikationskanal ausgesendet werden und ein Empfänger nach Empfang eines kommunikationseinleitenden Funktelegramms mit einer der Datenquellen kommuniziert, zumindest um Daten mit der Datenquelle auszutauschen und eine Datenquelle nach erfolgtem Austausch der Daten die weitere Aussendung periodischer kommunikationseinleitender Funktelegramme (B) auf dem hierfür bestimmten Kommunikationskanal (1) für ein vorbestimmtes Zeitintervall unterbricht, **dadurch gekennzeichnet, dass** mit fortschreitender Abfrage von Datenquellen nach kollisionsfreiem Empfang eines kommunikationseinleitenden Funktelegramms sich die Anzahl vorhandener Datenquellen reduziert, die noch nicht abgefragt wurden und die weiterhin ihre für die Abfrage bestimmten kommunikationseinleitenden Funktelegramme aussenden und zum Schluss die zur Verfügung stehenden Daten von der letzten alleinig ihre Funktelegramme aussendenden Datenquelle vom Empfänger abgefragt werden, wobei das vorbestimmte Zeitintervall so bemessen ist, dass innerhalb dieses Zeitintervalls die Abfrage sämtlicher zur Verfügung stehender Datenquellen vollständig abgeschlossen wird.

2. Verfahren nach Anspruch 1, **dadurch gekennzeichnet, dass** eine weitere Kommunikation nach einer Datenübertragung und/oder die Datenübertragung (A) selbst zwischen der Datenquelle und einem Empfänger auf einem anderen Kommunikationskanal (2) stattfindet.

3. Verfahren nach einem der vorherigen Ansprüche, **dadurch gekennzeichnet, dass** eine Datenquelle nach einer Datenübertragung (A) die weitere Aussendung periodischer Funktelegramme (B) auf dem hierfür bestimmten Kommunikationskanal (1) unterbricht und auf einem anderen Kommunikationskanal (2) oder einem weiteren hierfür bestimmten Kommunikationskanal fortsetzt.

4. Verfahren nach Anspruch 1-2, **dadurch gekennzeichnet, dass** eine Datenquelle nach einer Datenübertragung die weitere Aussendung periodischer Funktelegramme (B) auf dem hierfür bestimmten Kommunikationskanal (1) beendet und auf einem weiteren hierfür bestimmten Kommunikationskanal (2) fortsetzt, insbesondere, dass zwischen zwei Kommunikationen ein Wechsel des Kanals für die Aussendung periodischer Funktelegramme (B) zwischen zwei hierfür bestimmten Kommunikationskanälen (1,2) stattfindet.

5. Verfahren nach einem der vorherigen Ansprüche, **dadurch gekennzeichnet, dass** die Datenquellen gebildet werden durch Geräte zur Verbrauchsdatenerfassung, insbesondere Heizkostenverteiler oder Wasser- oder Wärmezähler oder spezieller Kommunikationsmodule für Verbrauchszähler.

6. Verfahren nach einem der vorherigen Ansprüche, **dadurch gekennzeichnet, dass** die Datenquellen gebildet werden durch Geräte zur Alarmmeldung, insbesondere Rauch-/Brandmelder.

7. Verfahren nach einem der vorherigen Ansprüche, **dadurch gekennzeichnet, dass** die Aussetzung der Kommunikation und/oder die Umschaltung auf einen anderen Kommunikationskanal initiiert wird durch einen Befehl, der von einem Empfänger an eine Datenquelle vor oder nach der Datenübertragung (A) gesendet wird.

8. Funksystem mit mehreren Datenquellen und wenigstens einem Empfänger, zum drahtlosen Austausch von Daten von den mehreren Datenquellen zu dem wenigstens einen Empfänger, wofür die Datenquellen eingerichtet sind, kommunikationseinleitende Funktelegramme im Wesentlichen periodisch auf einem hierfür bestimmten Kommunikationskanal auszusenden und ein Empfänger eingerichtet ist, nach Empfang eines kommunikationseinleitenden Funktelegramms mit einer der Datenquellen zu kommunizieren, zumindest um Daten mit der Datenquelle auszutauschen, wobei eine Datenquelle eingerichtet ist, nach erfolgtem Austausch der Daten die weitere Aussendung periodischer kommunikationseinleitender Funktelegramme (B) auf dem hierfür bestimmten Kommunikationskanal (1) für ein vorbestimmtes Zeitintervall zu unterbrechen, **dadurch gekennzeichnet, dass** mit fortschreitender Abfrage von Datenquellen nach kollisionsfreiem Empfang eines kommunikationseinleitenden Funktelegramms sich die Anzahl vorhandener Datenquellen reduziert, die noch nicht abgefragt wurden und die weiterhin ihre für die Abfrage bestimmten kommunikationseinleitenden Funktelegramme aussenden und das System eingerichtet ist, zum Schluss die zur Verfügung stehenden Daten von der letzten alleinig ihre Funktelegramme aussendenden Datenquelle vom Empfänger abzufragen, wobei das vorbestimmte Zeitintervall so bemessen ist, dass innerhalb dieses Zeitintervalls die Abfrage sämtlicher zur Verfügung stehender Datenquellen vollständig abgeschlossen ist.

## Claims

1. Method for the wireless interchange of data from a plurality of data sources with at least one receiver, in which communication-initiating radio messages are transmitted by the data sources essentially periodically on a communication channel that is intended for this purpose and a receiver, following reception of a communication-initiating radio message, communicates with one of the data sources, at least in order to interchange data with the data source, and a data source, following interchange of the data, interrupts the further transmission of periodic communication-initiating radio messages (B) on the communication channel (1) that is intended for this purpose for a predetermined interval of time, **characterized in that** as the interrogation of data sources progresses, collision-free reception of a communication-initiating radio message is followed by a reduction in the number of existent data sources that have not yet been interrogated and that continue to transmit their communication-initiating radio messages that are intended for the interrogation and finally the available data from the last data source transmitting solely its radio messages are requested by the receiver, wherein the predetermined interval of time is proportioned such that the interrogation of all available data sources is concluded completely within this interval of time.

2. Method according to Claim 1, **characterized in that** further communication takes place after a data transmission and/or the data transmission (A) itself between the data source and a receiver takes place on another communication channel (2).

3. Method according to either of the preceding claims, **characterized in that** a data source, following a data transmission (A), interrupts the further transmission of periodic radio messages (B) on the communication channel (1) that is intended for this purpose and continues it on another communication channel (2) or on a further communication channel that is intended for this purpose.

4. Method according to Claims 1-2, **characterized in that** a data source, following a data transmission, terminates the further transmission of periodic radio messages (B) on the communication channel (1) that is intended for this purpose and continues it on a further communication channel (2) that is intended for this purpose, in particular **in that** a change of channel for the transmission of periodic radio messages (B) between two communication channels (1, 2) that are intended for this purpose takes place between two communications.

5. Method according to one of the preceding claims, **characterized in that** the data sources are formed by appliances for consumption data capture, particularly heating cost distributors or water or heat meters or special communication modules for consumption meters.

6. Method according to one of the preceding claims, **characterized in that** the data sources are formed by appliances for raising an alarm, particularly smoke/fire alarms.

7. Method according to one of the preceding claims, **characterized in that** the suspension of communication and/or the changeover to another communication channel is initiated by a command that is sent by a receiver to a data source before or after the data transmission (A) .

8. Radio system having a plurality of data sources and at least one receiver, for the wireless interchange of data from the plurality of data sources with the at least one receiver, for which purpose the data sources are set up to transmit communication-initiating radio messages essentially periodically on a communication channel that is intended for this purpose and a receiver is set up to communicate, following reception of a communication-initiating radio message, with one of the data sources, at least in order to interchange data with the data source, wherein a data source is set up to interrupt, following interchange of the data, the further transmission of periodic communication-initiating radio messages (B) on the communication channel (1) that is intended for this purpose for a predetermined interval of time, **characterized in that** as the interrogation of data sources progresses, collision-free reception of a communication-initiating radio message is followed by a reduction in the number of existent data sources that have not yet been interrogated and that continue to transmit their communication-initiating radio messages that are intended for the interrogation and the system is set up finally to request the available data from the last data source transmitting solely its radio messages by means of the receiver, wherein the predetermined interval of time is proportioned such that the interrogation of all available data sources is concluded completely within this interval of time.

## Revendications

1. Procédé pour l'échange sans fil de données d'une pluralité de sources de données vers au moins un récepteur, dans lequel des télégrammes radio déclenchant une communication sont émis par des sources de données de manière sensiblement périodique sur un canal de communication déterminé à cet effet et un récepteur communique avec l'une des sources de données, après réception d'un télégramme radio déclenchant une communication, pour au moins échanger des données avec la source de données, et une source de données, après avoir effectué un échange des données, interrompt la poursuite de l'émission de télégrammes radio périodiques (B) déclenchant la communication sur le canal de communication (1) destiné à cet effet pendant un intervalle de temps prédéterminé, **caractérisé en ce que**, au moyen d'une interrogation en cours de sources de données après réception sans collision d'un télégramme radio déclenchant une communication, on réduit le nombre de sources de données présentes qui n'ont pas encore été interrogées et qui émettent en outre leurs télégrammes radio déclenchant une communication déterminés pour l'interrogation et enfin, les données disponibles sont demandées par le récepteur à la dernière source de données émettant seule ses télégrammes radio, dans lequel l'intervalle de temps prédéterminé est mesuré de telle manière qu'au cours de cet intervalle de temps, l'interrogation de la totalité des sources de données disponibles soit entièrement achevée.

2. Procédé selon la revendication 1, **caractérisé en ce qu'**une autre communication est effectuée après une transmission de données et/ou **en ce que** la transmission de données (A) se produit elle-même entre la source de données et un récepteur sur un autre canal de communication (2).

3. Procédé selon l'une quelconque des revendications précédentes, **caractérisé en ce qu'**une source de données, après une transmission de données (A) interrompt la poursuite de l'émission de télégrammes radio périodiques (B) sur le canal de communication (1) déterminé à cet effet et la poursuit sur un autre canal de communication (2) ou un canal de communication supplémentaire déterminé à cet effet.

4. Procédé selon la revendication 1 ou 2, **caractérisé en ce qu'**une source de données, après une transmission de données, interrompt la poursuite de l'émission de télégrammes radio périodiques (B) sur le canal de communication (1) déterminé à cet effet et la poursuit sur un canal de communication supplémentaire déterminé à cet effet (2), notamment, **en ce qu'**entre deux communications, un changement de canal destiné à l'émission de télégrammes radio périodiques (B) a lieu entre deux canaux de communication déterminés à cet effet (1, 2).

5. Procédé selon l'une quelconque des revendications précédentes, **caractérisé en ce que** les sources de données sont constituées par des dispositifs d'acquisition de données de consommation, notamment des répartiteurs de frais de chauffage ou des compteurs d'eau ou de chaleur ou des modules de communication spéciaux destinés à des compteurs de consommation.

6. Procédé selon l'une quelconque des revendications précédentes, **caractérisé en ce que** les sources de données sont constituées par des dispositifs d'alarme, notamment des détecteurs de fumée/d'incendie.

7. Procédé selon l'une quelconque des revendications précédentes, **caractérisé en ce que** la suspension de la communication et/ou le basculement sur un autre canal de communication est déclenché par une commande qui est envoyée par un récepteur à une source de données avant ou après la transmission de données (A) .

8. Système radio comportant une pluralité de sources de données et au moins un récepteur destiné à l'échange sans fil de données d'une pluralité de sources de données vers l'au moins un récepteur, les sources de données étant à cet effet conçues pour émettre des télégrammes radio déclenchant une communication de manière sensiblement périodique sur un canal de communication déterminé à cet effet et un récepteur est conçu pour communiquer, après réception d'un télégramme radio déclenchant une communication, avec l'une des sources de données, pour au moins échanger des données avec la source de données, dans lequel une source de données est conçue pour interrompre, après avoir effectué un échange des données, l'émission de télégrammes radio périodiques déclenchant la communication (B) sur le canal de communication (1) destiné à cet effet pendant un intervalle de temps prédéterminé, **caractérisé en ce que**, au moyen d'une interrogation en cours de sources de données après réception sans collision d'un télégramme radio déclenchant une communication, on réduit le nombre de sources de données présentes qui n'ont pas encore été interrogées et qui émettent en outre leurs télégrammes radio déclenchant une communication déterminés pour l'interrogation et **en ce que** le système est enfin conçu pour demander, au moyen du récepteur, les données disponibles à la dernière source de données émettant seule ses télégrammes radio, dans lequel l'intervalle de temps prédéterminé est mesuré de telle manière qu'au cours de cet intervalle, l'interrogation de la totalité des sources de données disponibles soit entièrement achevée.
